**Europäisches Patentamt**

**European Patent Office**

**Office européen des brevets**

(19)

(11) **EP 1 055 900 A2**

(12) # EUROPEAN PATENT APPLICATION

(43) Date of publication:
**29.11.2000  Bulletin 2000/48**

(51) Int Cl.[7]: **G01B 7/12**

(21) Application number: **00500082.3**

(22) Date of filing: **03.05.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **18.05.1999  ES 9901063**<br><br>(71) Applicant: **PATENTES TALGO, S.A.**<br>**28014 Madrid (ES)**<br><br>(72) Inventors:<br>• **Lopez Gomez, José Luis**<br>**28014 Madrid (ES)** | • **Sanchez Revuelta, Angel Luis**<br>**28014 Madrid (ES)**<br>• **Gomez Gomez, Carlos Javier**<br>**28014 Madrid (ES)**<br><br>(74) Representative:<br>**Diez de Rivera de Elzaburu, Alfonso et al**<br>**Elzaburu S.A.,**<br>**Miguel Angel, 21**<br>**28010 Madrid (ES)** |

(54) **Facility and process for measuring the difference in diameter of two train wheels attached to the same axle**

(57)    A facility and a process for measuring the difference in diameter of train wheels attached to the same axle. A point-rail segment (2) on each rail of track is provided between main rail segments (1), said point-rail segments (2) being staggered with respect to one another in the direction of the track, so that when one of the attached wheels in said axle moves upon a segment (2) while its lateral creeping is prevented, its tendency to slip is translated into a movement of said segment (2) between said segments (1) which is proportional to the difference between said wheel diameters. Compensation means (6) are provided in order to maintain said segments (2) in position, as well as transducers (7) to transform the movement of each one of said segments (2) into an electrical signal which is fed to a data processing equipment (D,P).

**FIG. 2**

EP 1 055 900 A2

## Description

Field of the Invention

The present invention refers to a facility and a process for measuring the difference in diameter of two train wheels attached to the same axle.

Background of the Invention

At the present time, when two train wheels attached to the same axle have different diameters due, e.g., to unequal wear of the same, the slipping of one of them while turning, which is inavoidable so that the paths travelled by both may be the same, is prevented because by virtue of the conicity of the flange gauge the axle moves laterally in such a way that the smaller wheel travels through a greater turning diameter while the larger wheel travels through a smaller turning diameter.

This way of turning by both wheels may cause drawbacks if steps are not taken on time to correct such situation, for example, significant deterioration of the wheels themselves or of the rails. Thus it is important to be able to establish the difference in diameter that may exist between two wheels on the same axle of a railway vehicle.

Systems for measuring the diameter of wheels of railway vehicles in motion are already known. Thus, patent EP-A-0 555 169 of the present applicant describes a control post for railway wheel sets in which different wheel parameters, including the diameters of the same, are calculated with the aid of potentiometric test probes and an electronic apparatus.

Moreover, patent application EP-A-0 751 371 of the present applicant describes a facility and a process for measuring rolling parameters in railway vehicle wheels, in which the wheel diameter is measured among other things with the aid of a laser generator, a camera which captures the image formed by projecting a laser beam on the wheel, and an electronic apparatus which analyses the image captured by the camera and deduces the wheel diameter from it.

However, there is no knowledge about systems developed in the prior art which measure the difference that may possibly exist between the diameters of two wheels attached to the same train axle. The present invention overcomes this technological gap by means of the facility and measurement process described in detail hereinbelow.

Summary of the Invention

In accordance with the present invention, a process is provided for measuring the difference in diameter between two train wheels attached to the same axle, the process is based on the previously mentioned fact that the number of turns of each wheel is the same while in motion and in that since the diameters of the said wheels are different, the path travelled by both is also different, which means that one of them must slip in order to adjust the distance travelled by each wheel, provided that lateral creeping of the train axle is prevented, obliging both wheels to travel through a tread circle which is at the same distance from the inner side of each wheel. If in the course of this turning with slipping, the wheel which slips (the larger one) encounters a point-rail segment in the direction of the track, said slipping does not occur but is translated into a movement of said rail segment which is proportional to the difference between the diameters of the wheels, and said movement may be transformed into an electrical signal fed to a data-processing device by means of at least a transducer provided between said point-rail segment and the adjacent main rail.

Preferably, said distance between the tread circle and the inner side of a wheel is $70 \pm 3$ mm.

Also preferably, the maximum creeping distance of said point-rail segments is 10 mm in each direction.

The invention is also concerned with a facility for the execution of said process, the facility comprising: a section of track in which there are point-rail segments on each rail of the track, arranged in such a way that they are not paired but rather staggered over a determinate distance along the track, and each one of the point-rail segments may move in both directions, in the direction of the track, between main rail segments, said point-rail segments being mounted on guide rails which may move on tracks provided on the bed of the fixed installation of the rolling path; check rail means intended to prevent lateral creeping of the train's axle as it passes through the facility; compensation means intended to compensate for the instability of the system and each one of which is coupled on one side to a main rail segment and on the other side to one end of a point-rail segment; transducer means, each one of which is mechanically connected between one end of the main rail and one end of the point-rail segment for each rail of track; and data processing means intended to receive the electrical signals from said transducer means.

Also in accordance with the invention, said compensation means may be made up of springs or a hydraulic or pneumatic system.

Moreover, the invention provides for the use of shock-absorbing means coupled between the main rail segments and said point-rail segments.

First rolling path protection means are conveniently provided, mounted on each side of the fixed bed in relation to which each point-rail segment moves, as well as second protection means joined together with the latter and which co-operate with said first protection means in order to prevent foreign materials from entering the movement area of the point-rail segments.

Finally, the invention allows this measurement facility to be carried out in the open air, in a track with UIC 54-type rails, on a bed prepared with HEB profiles and joined to the floor of the triple railway pit by means of chemical or mechanical plugs.

The facility and the process according to the present invention are applicable to any rail gauge and to any railway system that is not provided with a freewheel.

Brief Description of the Drawings

In what follows, the invention is described in more detail with reference to the attached drawings, in which:

Fig. 1 is a schematic plan view which illustrates the facility as a whole;
Fig. 2 shows an elevational view of one rail of track which incorporates a point-rail segment in accordance with the invention; and
Fig. 3 is a sectional view of the point-rail segment taken along the line A-A of figure 2, representing part of the wheel profile situated on said segment in diagrammatic form, using a solid line.

Detailed Description of the Preferred Embodiment

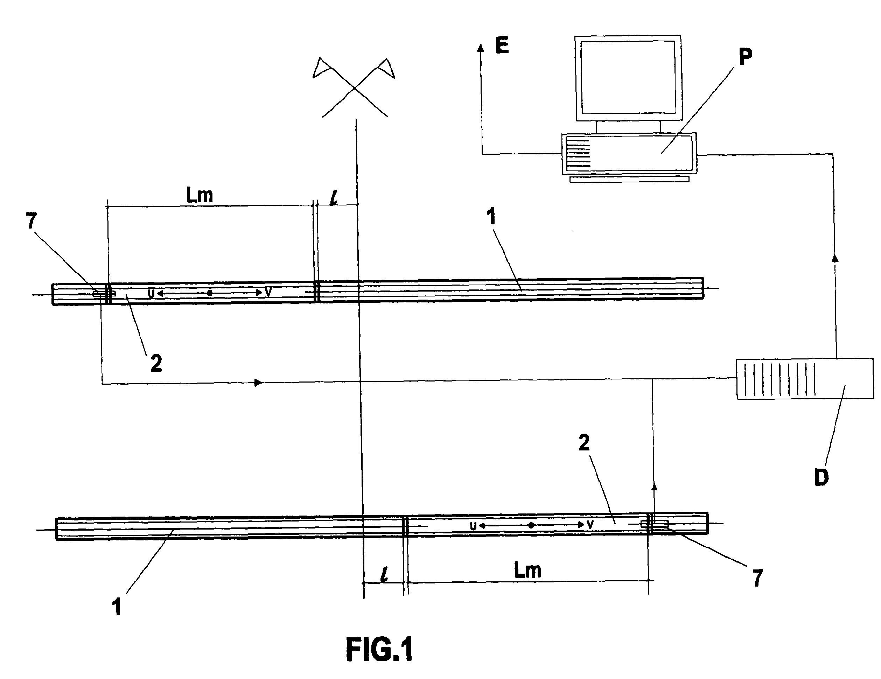

With reference to the drawings and in particular to fig. 1 of the same, the latter represents a segment of rail track made up of two rails of main rail (1) which in the present case correspond to the UIC 54 profile and which have cuts of a certain length, which are not paired in the longitudinal direction of the track, but staggered at the distance (21).

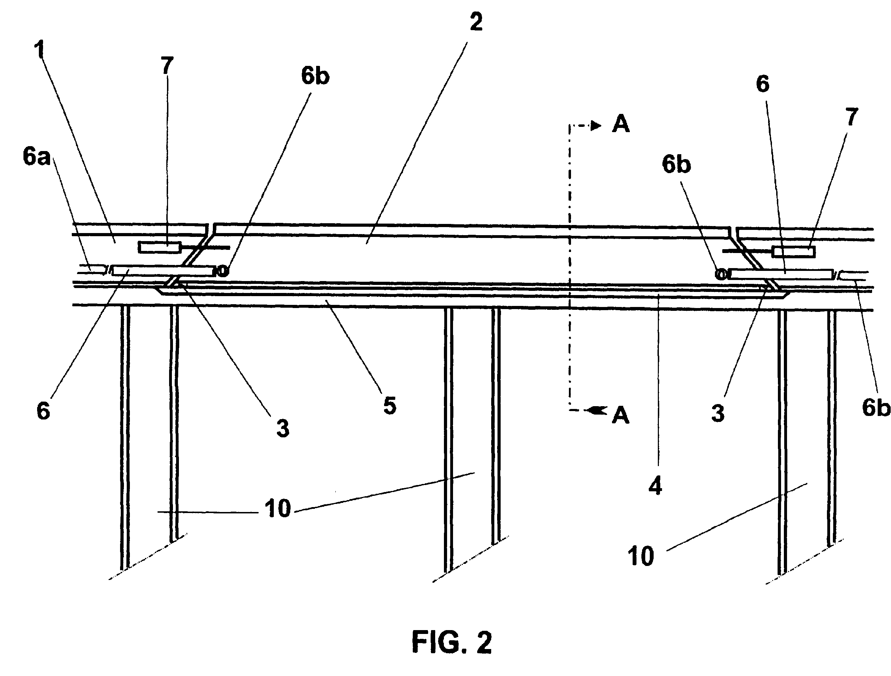

In said cuts, there are point-rail segments (2) of a slightly shorter length than the distance between the ends of the main rail segments (1) of the same rail of track and aligned with them, the outer sides of each one of said rail segments (2) (see fig. 2) being inclined in relation to the vertical so as to adapt to the outer sides of said main rails (1) so that between them there is a certain free space to allow said rail segments (2) to move in either direction in the direction of the track. Connecting the adjacent ends of said main rails (1) and of said rail segments (2), there are transducers (7) intended to detect the movement of the latter while the facility is working and to transform the detected movement into an electrical signal which is fed to an electronic device (D) for processing signals which is in turn connected to a computer (P) which in turn may be provided with an external connection (E) for transmitting data, for example, to a communications network or to other computers.

Each one of said point-rail segments (2) may move in directions u or v according to whether the wheel of greater or smaller diameter of a pair of wheels (not shown in fig. 1) attached to the same axle of a piece of mobile equipment travels along that rail of the track.

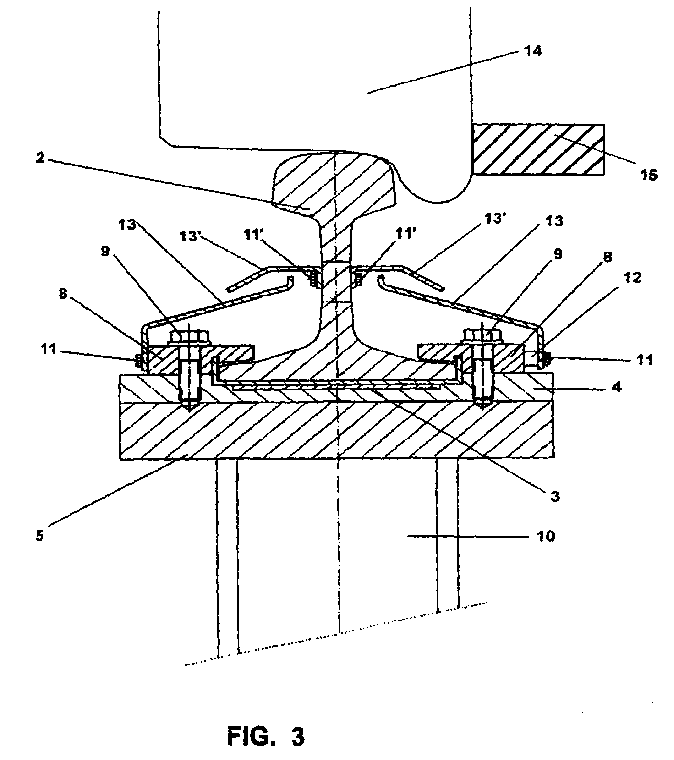

With reference now to figs. 2 and 3 of the drawings, it may be observed that the movement of said rail segments (2) is carried out thanks to the fact that it is mounted on a rolling path (3) arranged with an intervening support (4) on the fixed installation of the rolling path, formed by linear needle bearings or a similar device. In turn, a fixed support (5) holds the support (4) of the rolling path of point-rail segment (2) and in turn forms part of the supporting structure made up of a bed of HEB profiles (10), which are joined to the floor of a triple railway pit by means of chemical or mechanical plugs of a known type. Bolts (9) keep the guide rails (8) of the point-rail segment (2) in position, making said guide rails (8) join together with said support (4). In said guide rails (8) fixed protection shields (13) are mounted by means of, for example, screws (11) with or without chaplets (12), which are intended to co-operate with shields 13' fixed in 11' throughout the length of each point-rail segment (2), which overlap said shields (13) to prevent the introduction of foreign bodies in the movement area of rail segment (2).

In fig. 2, (6) refers to elastic compensation elements which are antagonists (in the present case these are springs although a hydraulic or pneumatic system may be used), connected by one of their ends (6a) to the main rail segments (1), while by their other ends at (6b) they are connected close to their ends to the point-rail segments (2). These springs (6) serve to keep each point-rail segment (2) in a resting position between the ends of the main rails (1) in the absence of a wheel upon said rail segments (2).

Check rails (15) (one for each rail of track) prevent lateral creepings of the train axle to which the wheels whose diameter is to be measured are attached.

The operation of the preferred embodiment of the present invention which has just been described in the foregoing will be explained below.

It will be considered that an axle provided with wheels (14) (of which only one is shown diagrammatically in fig. 3) arrives at the measurement section represented in fig. 1 of the drawings, moving from right to left as one looks at said fig. 1, with an expected maximum speed of 10 km/h. As said train axle (a pair of wheels) constitutes a system that is linked mechanically and the wheel-rail set being a system that is linked by the weight acting upon said axle, one of the wheel-rail sets is linked by said weight, the other wheel-rail set becoming a free system as the rail segment is allowed to move over the one which said latter wheel runs upon.

Supposing that the wheel with the smaller diameter $(D_2)$ travels along the rail of track shown in the lower part of fig. 1, when said wheel of smaller diameter moves upon the first point-rail segment (2) (with a length Lm) it will make the latter move in the direction of the arrow v, thus absorbing the tendency to slip of said wheel of smaller diameter. This movement in accordance with v will be detected by the transducers 7 (which may be made up of potentiometers) provided at the ends of said first rail segment (2), which will transmit signals from which it will be possible to determine its magnitude.

As the axle continues to move towards the left in fig. 1, the wheel of smaller diameter will leave the first point-rail segment (2) in its line of track, which will return to its resting position by means of the action of the compensation means (6) and, after travelling a distance 21, the wheel of greater diameter ($D_1$) will run in the second point-rail segment (2) shown in the upper part of said fig. 1.

Then, said wheel of greater diameter will transform its tendency to slip into a movement of said second rail segment (2) in the direction of the arrow u, this movement being detected and measured by the pair of transducers (7) corresponding to said second point-rail segment (2) during the length Lm.

The difference in diameters means that each time the wheel runs on a point-rail segment, the latter moves in the proportion of length $\pi(D_1-D_2)$ where, as stated above, $D_1$ and $D_2$ are the diameters of said wheels.

Taking into account that this measurement in one of the rails of track is repeated a little later for the other rail of track, both movements may be compared, the difference between the wheel diameters being given by the expression:

$$\Delta D = \frac{L_1 + L_2}{2} \cdot \frac{D_{ref}}{Lm}$$

where $D_{ref}$ is a reference value of the diameter of the wheels and $L_1$ and $L_2$ are the absolute values of the movements of the point-rail segments of length Lm.

The signals transmitted from the transducers (7) are received by the electronic processing device (D), which transmits them to a computer also with the intention of constituting a data base for subsequent use and providing the value ($D_{ref}$) of the reference diameter.

Evidently, the invention is not limited to the preferred embodiment just described. For example, the magnitudes indicated hereinbefore with respect to the length of the point-rail segments and maximum permitted movement of the same in each direction may change so as to adapt them both to the infrastructure of the track and to the mobile railway equipment, provided that, as stated above, measurements are carried out of wheels which are rigidly attached to the same axle.

**Claims**

1.  A facility for measuring the difference in diameter of two train wheels attached to the same axle, the facility comprising:

    -   a section of track in which there is provided a point-rail segment (2) on each rail of track, which may move in both directions, in the direction of the track, between main rail segments (1), said point-rail segments (2) being staggered with respect to one another for a predetermined distance in the direction of the track and mounted on guide rails so that they may move on tracks (3, 4, 5) provided in the bed of the fixed installation of the rolling path;

    -   check rail means (15) intended to prevent lateral creeping of the train axle while it is passing through the facility;

    -   compensation means (6), each one connected on one side to a main rail segment (1) and, on the other side, to one of the ends of said point-rail segments (2);

    -   transducer means (7), each one of which is mechanically connected between one end of the main rail (1) and one end of said point-rail segments (2); and

    -   data processing means (D, P) intended to receive the electrical signals from the said transducers (7).

2.  A facility in accordance with claim 1, in which said compensation means (6) are made up of springs.

3.  A facility in accordance with claim 1, in which said compensation means (6) are made up of a hydraulic system.

4.  A facility in accordance with claim 1, in which said compensation means (6) are made up of a pneumatic system.

5.  A facility in accordance with any one of the foregoing claims, in which shock-absorbing means are provided, connected between said main rail segments (1) and said point-rail segments (2) and of initial position recovery.

6.  A facility in accordance with any one of the foregoing claims, in which first and second protection means (13, 13') are respectively associated with said main rail segments (1) and with said point-rail segments (2), said first and second protection means (13, 13') co-operating to prevent foreign materials from entering the installation's measurement section.

7.  A facility in accordance with any one of the foregoing claims, which is mounted on a bed made up of profiles (10) which are joined to the floor of a railway pit by means of chemical or mechanical plugs, in such a way that it forms part of a section of track.

8.  A process for measuring the difference in diameter of two train wheels attached to the same axle, according to which said axle is made to travel through a facility in accordance with claims 1 to 7, at the same time as lateral creeping of said train axle is prevented, so that both wheels (14) are made to travel through a tread circle which is at the same distance from the inner side of each wheel, a situation in which one of said wheels will slip, so that the wheel which slips in the course of this turning encounters at least a point-rail segment (2) in the direction of the track, so that said slipping is translated into a movement of one of said point-rail segments (2) which is proportional to the difference between the wheel diameters, and said movement is transformed into an electrical signal which is fed to a data processing device (D, P) by means of at least a transducer (7).

9. A process in accordance with claim 8, according to which said distance between the tread circle and the inner side of the wheel is $70 \pm 3$ mm.

10. A process in accordance with any one of claims 8 and 9, according to which the maximum distance of movement of said at least one point-rail segment is 10 mm in both directions.

11. A process in accordance with any one of claims 8 to 10, according to which a measurement of the magnitude of movement of the point-rail segment is carried out upon both rails of track, both movements then being compared and the difference between the said wheel diameters being obtained by the expression:

$$\Delta D = \frac{L_1 + L_2}{2} \cdot \frac{D_{ref}}{Lm}$$

where $L_1$ and $L_2$ are the absolute values of the movements of said sections of staggered moveable rails, Lm is the measurement distance and $D_{ref}$ is the reference value of the diameter of the wheels.

**FIG.1**

EP 1 055 900 A2

FIG. 2

FIG. 3